# EUROPÄISCHE PATENTANMELDUNG

(11) **EP 3 647 547 A1**
(43) Veröffentlichungstag der Anmeldung: **06.05.2020**
(21) Anmeldenummer: 19205881.6
(22) Anmeldetag: 29.10.2019
(51) Int. Cl.: F01D 11/00, F01D 9/04, B22F 3/105, B33Y 80/00, F01D 11/12

(54) **DICHTANORDNUNG FÜR EINE STRÖMUNGSMASCHINE UND HERSTELLUNGSVERFAHREN**

(30) Priorität: 30.10.2018 DE 102018218604
(71) Anmelder: MTU Aero Engines AG, 80995 München (DE)
(72) Erfinder: Schleif, Beate, 80995 München (DE); Greitemeier, Daniel, 80995 München (DE)

(57) **Zusammenfassung**

Die vorliegende Erfindung betrifft eine Dichtanordnung (23) für eine Strömungsmaschine (1), mit einem Dichtungsträger (24) und einer an dem Dichtungsträger (24) angeordneten Dichtstruktur (30), wobei die Dichtstruktur (30) generativ aufgebaute Vorsprünge (32) aufweist, die sich jeweils von dem Dichtungsträger (24) weg zu einem freien Ende (32.1) hin erstrecken, wobei die Vorsprünge (32) jeweils mit einem variierenden Querschnittsprofil aufgebaut sind, nämlich ein jeweiliger Vorsprung (32) in einem dem Dichtungsträger (24) distalen Abschnitt (33), an dem freien Ende (32.1) eine geringere Dicke (34) als in einem dem Dichtungsträger (24) proximalen Abschnitt (35) hat.

## Beschreibung

### Technisches Gebiet

Die vorliegende Erfindung betrifft eine Dichtanordnung für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Dabei entzieht die Turbine dem Heißgas anteilig auch Energie, um den Verdichter anzutreiben. Die Turbine und der Verdichter sind i.d.R. jeweils mehrstufig aufgebaut, wobei eine Stufe jeweils einen Leit- und einen Laufschaufelkranz aufweist.

In einer Strömungsmaschine werden verschiedene Bauteile relativ zueinander bewegt, wobei je nach Bauteil auch eine Relativabdichtung gegen Differenzdrücke erforderlich sein kann. Dabei kommen sogenannte Honigwabendichtungen zum Einsatz. Diese werden aus Blechbändern durch Punktschweißen gefügt und auf einen Dichtungsträger aufgelötet, sodass die Honigwaben zu einer dem Dichtungsträger entgegengesetzten Seite hin offene Hohlräume bilden. Von dieser Seite erstreckt sich dann als Gegenstück ein im Betrieb relativ bewegtes Dichtteil an die Dichtstruktur, oft als Dichtspitze bzw. *Fin* bezeichnet.

### Darstellung der Erfindung

Der vorliegenden Erfindung liegt das technische Problem zugrunde, eine besonders vorteilhafte Dichtanordnung anzugeben.

Dies wird erfindungsgemäß mit der Dichtanordnung nach Anspruch 1 gelöst. Deren Dichtstruktur weist generativ aufgebaute Vorsprünge auf, die also als 3D-Druckteil hergestellt sind. Wie nachstehend im Einzelnen diskutiert, können die Vorsprünge einerseits Stegwände sein, die anlog der Erläuterung eingangs miteinander einseitig offene Hohlräume begrenzen. Andererseits kann sich bei den Vorsprüngen auch um Streben handeln, die in ein Füllmaterial eingebettet sind. Die Vorsprünge werden jedenfalls aus einem zuvor formlosen bzw. -neutralen Werkstoff schichtweise anhand eines Datenmodells erzeugt, was Freiheiten bei der Formgebung eröffnet. Im Falle der Stegwände sind bspw. auch von der (regelmäßigen) Honigwabenform abweichende Geometrien möglich, die sich bspw. auf die Dichtfunktion hin optimieren lassen.

Die Vorsprünge werden bzw. sind dabei erfindungsgemäß mit einem variierenden Querschnittsprofil aufgebaut, nämlich in einem dem Dichtungsträger proximalen (nahen) Abschnitt mit größerer Weite bzw. Dicke als in einem dem Dichtungsträger distalen (entfernten) Abschnitt. Die Vorsprünge erstrecken sich von dem Dichtungsträger weg jeweils zu einem freien Ende hin, an diesem liegt der distale Abschnitt. Die geringere Wandstärke dort ist hinsichtlich eines Anstreifens von Vorteil, wenn im Betrieb bspw. die Dichtspitze bzw. der *Fin* mit einem gewissen Abrieb der Dichtstruktur in diese einläuft. Insofern ergibt die verringerte Dicke der Vorsprünge dort ein gutes Einlaufverhalten.

Die größere Dicke in dem proximalen Abschnitt kann hingegen hinsichtlich der Stabilität von Vorteil sein, bspw. die Biege- bzw. Schwingfestigkeit der Anbindung an den Dichtungsträger betreffend. Verglichen mit anderen Fertigungsverfahren kann die generative Herstellung mit ggf. etwas höherer Wahrscheinlichkeit intrinsische Defektstellen ergeben, die bei einer Belastung im Betrieb schlimmstenfalls zu einer makroskopischen Schadstelle und damit einem Bauteilversagen führen könnten. Indem die Dicke und damit Materialstärke in dem mechanisch beanspruchten Bereich am Übergang in den Dichtungsträger erhöht ist, ist dort vereinfacht ausgedrückt selbst im Falle einer intrinsischen Defektstelle noch hinreichend intaktes Material für eine zuverlässige Anbindung vorhanden.

Bevorzugte Ausgestaltungen finden sich in den abhängigen Ansprüchen und der gesamten Beschreibung, wobei bei der Darstellung der Merkmale nicht immer im Einzelnen zwischen der Dichtanordnung und der Strömungsmaschine bzw. dem entsprechenden Modul unterschieden wird; jedenfalls implizit ist die Offenbarung hinsichtlich sämtlicher Anspruchskategorien zu lesen. Die Angaben "proximal" und "distalen" kennzeichnen die Lage der Abschnitte untereinander und dabei relativ zu dem Dichtungsträger, es ist also der proximale Abschnitt näher am Dichtungsträger als der distale Abschnitt.

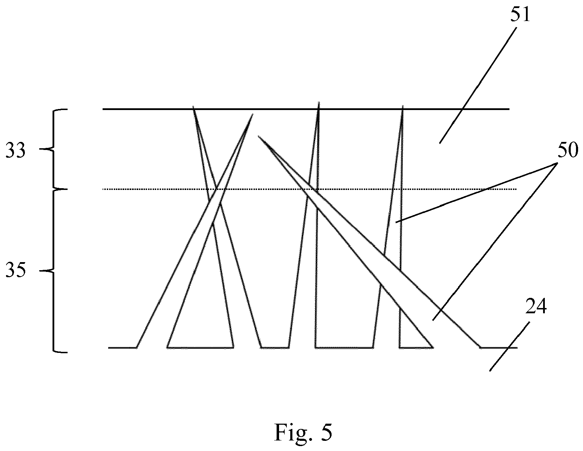

Betrachtet man das Querschnittsprofil eines jeweiligen Vorsprungs, also einen Schnitt entlang seiner Höhenerstreckung von dem Dichtungsträger zum freien Ende des Vorsprungs, wird die Dicke in diesem Schnitt jeweils senkrecht zu der Höhenerstreckung genommen. Insbesondere im Falle der Streben können die Vorsprünge relativ zueinander auch verkippt liegen, wodurch Hinterschneidungen entstehen (guter Halt für das Füllmaterial), vgl. Fig 5 zur Illustration. Die Stegwände können hinsichtlich ihrer Höhenrichtungen bevorzugt parallel zueinander liegen, bezogen auf die Einbaulage kann die Höhenrichtung dann bevorzugt radial orientiert sein ("radial" bezieht sich auf die Drehachse des bzw. der Laufschaufelkränze, die in der Regel mit einer Längsachse der Strömungsmaschine zusammenfällt).

Im Falle der Stegwände entspricht die "Dicke des Vorsprungs" der Wandstärke der Stegwand. In einer Aufsicht gesehen, also von der dem Dichtungsträger entgegengesetzten Seite auf die Stegwände blickend, können diese ein regelmäßiges oder auch unregelmäßiges Gitter bilden. In einfachen Varianten können Rechtecke, insbesondere Quadrate, aneinandergesetzt sein, es sind aber auch komplexere Strukturen möglich. Mittels der generativen Herstellung lassen sich regelmäßige Sechsecke als klassische Honigwabenform ebenso herstellen wie modifizierte Formen, z. B. langgestreckte Honigwaben oder auch Vierecke etc. Ebenso sind auch vollständig irreguläre, bspw. stochastisch erzeugte Strukturen möglich. Letzteres kann auch im Falle der Streben von Interesse sein. Dies soll verschiedene Möglichkeiten aufzeigen, Gegenstand vorliegend ist jedoch vielmehr ein hinsichtlich der generativen Herstellung geeignetes Querschnittsprofil anzugeben, welches diese geometrische Gestaltungsvielfalt eröffnet.

Die eingangs geschilderte Herstellung durch Auflöten von Blechbändern ist nicht nur in geometrischer Hinsicht begrenzt, sondern auch aufwendig. Es sind verschiedene Handhabungs- und Manipulationsschritte erforderlich, was sich durch die generative Herstellung zumindest reduzieren lässt. Bevorzugt ist nicht nur die Dichtstruktur mit den Vorsprüngen, sondern auch der Dichtungsträger generativ aufgebaut, vorzugsweise werden der Dichtungsträger und die Dichtstruktur gemeinsam im selben Herstellungsprozess erzeugt. Generell kann die Dichtstruktur bzw. Dichtanordnung bspw. aus einer Nickel- oder Kobaltlegierung aufgebaut sein. Das Dichtteil (Dichtspitze) kann bspw. aus einer Nickel-, Titan-, Kobalt- oder Eisenlegierung vorgesehen sein, ebenso ist eine intermetallische Legierung möglich.

Im Folgenden wird die geometrische Ausgestaltung der Vorsprünge weiter im Detail diskutiert, wobei sich diese Offenbarung sowohl auf die Ausgestaltung als Stegwände als auch auf die Streben bezieht.

Gemäß einer bevorzugten Ausführungsform hat bzw. haben die Vorsprünge in dem distalen Abschnitt eine konstante Dicke. Dies kann bspw. hinsichtlich eines möglichst gleichmäßigen Abriebverhaltens von Vorteil sein. Ebenfalls hinsichtlich des Einlaufens kann in dem distalen Abschnitt eine Dicke von höchstens 250 µm bevorzugt sein, mit weiteren vorteilhaften Obergrenzen bei höchstens 225 µm und 200 µm. Mit Blick auf die mechanische Stabilität können Untergrenzen bspw. bei mindestens 50 µm, 75 µm bzw. 100 µm liegen.

Bei einer bevorzugten Ausführungsform hat bzw. haben die Vorsprünge in dem proximalen Abschnitt eine maximale Dicke, die mindestens dem 3-fachen der mittleren bzw. bevorzugt konstanten Dicke in dem distalen Abschnitt entspricht. Mögliche Obergrenzen können bspw. bei höchstens dem 7-, 6- bzw. 5-fachen liegen. Ganz allgemein erreicht der Vorsprung seine maximale Dicke in der Regel dort, wo er in den Dichtungsträger übergeht.

In bevorzugter Ausgestaltung macht der proximale Abschnitt höchstens die Hälfte, bevorzugt höchstens ein Drittel der Höhe des Vorsprungs aus. Eine Begrenzung des Abschnitts größerer Dicke kann bspw. hinsichtlich eines insgesamt gewichtsoptimierten Aufbaus von Vorteil sein. Eine mögliche Untergrenze für die Erstreckung des proximalen Abschnitts liegt bspw. bei mindestens 1/6 der Höhe.

Bei einer bevorzugten Ausführungsform läuft bzw. laufen die Vorsprünge jeweils mit einer Verrundung in den Dichtungsträger. Vorteilhaft kann insbesondere eine Verrundung sein, die sich aus mehreren Radien zusammensetzt, was bspw. struktur- bzw. schwingungsmechanisch günstig sein kann. Solche Formen sind über die generative Herstellung auch gut zugänglich.

Wie bereits eingangs erwähnt, sind die Vorsprünge bei einer bevorzugten Ausführungsform Streben, also sich von dem Dichtungsträger weg erstreckende Zapfen. Diese Streben bzw. Zapfen sind von einem Füllmaterial bzw. Einlaufbelag umfüllt, bspw. umgossen. Sie halten das Füllmaterial an dem Dichtungsträger. Das Füllmaterial kann bspw. ein Polymermaterial sein, ebenso ist auch ein anorganisches Füllmaterial möglich, bspw. anorganische Hohlkugeln.

Bei einer anderen bevorzugten Ausführungsform sind die Vorsprünge Stegwände, haben sie also jeweils senkrecht zur Höhenrichtung eine langgestreckte Form. Miteinander begrenzen die Stegwände Hohlräume, die jeweils zu der dem Dichtungsträger entgegengesetzten Seite hin offen sind, siehe vorne.

In bevorzugter Ausgestaltung ist eine solche Stegwand als Vollkörper ausgebildet. Sie ist also zwischen ihren einander entgegengesetzten Außenwandflächen unterbrechungsfrei durchgehend, also frei von bspw. Kavitäten im Inneren. Dies kann, etwa mit Blick auf die hier relevanten Strukturgrößen, z. B. hinsichtlich der Herstellbarkeit von Vorteil sein. Insbesondere durch die Begrenzung der Höhe des proximalen Abschnitts und auch der maximalen Dicke in diesem kann gleichwohl ein insgesamt gewichtsoptimierter Aufbau resultieren.

Die Erfindung betrifft auch ein Modul für eine Strömungsmaschine, welches eine vorliegend diskutierte Dichtanordnung und ferner ein Dichtteil aufweist, das im Betrieb relativ zu der Dichtanordnung bewegt ist. Bei den Dichtteil kann es sich bevorzugt um eine Dichtspitze bzw. *Fin* handeln. Bevorzugt ist die Dichtanordnung Teil eines *Inner Air Seals,* ist sie also radial innerhalb des Gaskanals angeordnet. Der Gaskanal ist im Falle der Turbine deren Heißgaskanal, im Falle des Verdichters hingegen der Verdichtergaskanal.

Bevorzugt ist ein Aufbau derart, dass die Dichtanordnung radial innerhalb einer Innenplattform eines Leitschaufelkranzes aufgehängt ist. Dazu kann der Dichtungsträger in Form einer sogenannten Speichenzentrierung mit einem Zapfen zusammengesetzt sein, der sich von der Innenplattform nach radial innen erstreckt. Unabhängig von der Art der Aufhängung im Einzelnen ist die Dichtanordnung mit ihrer Dichtstruktur relativ zu dem Leitschaufelkranz lagefixiert. Das Dichtteil bzw. die Dichtspitze rotiert dann gemeinsam mit einem Laufschaufelkranz, es können selbstverständlich auch mehrere Dichtspitzen axial aufeinanderfolgend vorgesehen sein. Im Falle der Stegwände sind die von der Dichtstruktur gebildeten Hohlräume ungefüllt, befindet sich also darin kein Füllmaterial.

Die Erfindung betrifft auch eine Strömungsmaschine mit einer vorliegend offenbarten Dichtanordnung bzw. einem entsprechenden Modul. Bei der Strömungsmaschine kann es sich bevorzugt um ein Flugtriebwerk handeln, bspw. ein Mantelstromtriebwerk.

Ferner betrifft die Erfindung auch ein Verfahren zum Herstellen einer solchen Dichtanordnung bzw. des Moduls oder der Strömungsmaschine, wobei die Vorsprünge der Dichtstruktur generativ aufgebaut werden. Bevorzugt werden der Dichtungsträger und die Vorsprünge gemeinsam aufgebaut (siehe vorne), wobei eine Aufbaurichtung bevorzugt in Richtung der freien Enden der Vorsprünge weist (also zunächst der Dichtungsträger und dann die Dichtstruktur aufgebaut wird). Das generative Aufbauen kann bevorzugt in einem Pulverbettverfahren erfolgen, wobei der Werkstoff in Pulverform sequenziell Schicht für Schicht aufgetragen wird. Je Schicht wird selektiv ein anhand des Datenmodells der Bauteilgeometrie vorbestimmter Bereich verfestigt. Die Verfestigung erfolgt durch ein Aufschmelzen mittels einer Strahlquelle, etwa einer Elektronenstrahlquelle oder bevorzugt einer Laserquelle, was auch als selektives Laserschmelzen (SLM) bezeichnet wird.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: einen Ausschnitt eines Moduls des Strahltriebwerks, nämlich ein *Inner Air Seal*;
- Figur 3: eine Detailansicht einer Dichtstruktur als Teil des *Inner Air Seals*;
- Figur 4a-e: unterschiedliche Möglichkeiten zur Hohlraumgestaltung mit einer Dichtstruktur mit Stegwänden;
- Figur 5: eine aus Streben aufgebaute Dichtstruktur.

### Bevorzugte Ausführung der Erfindung

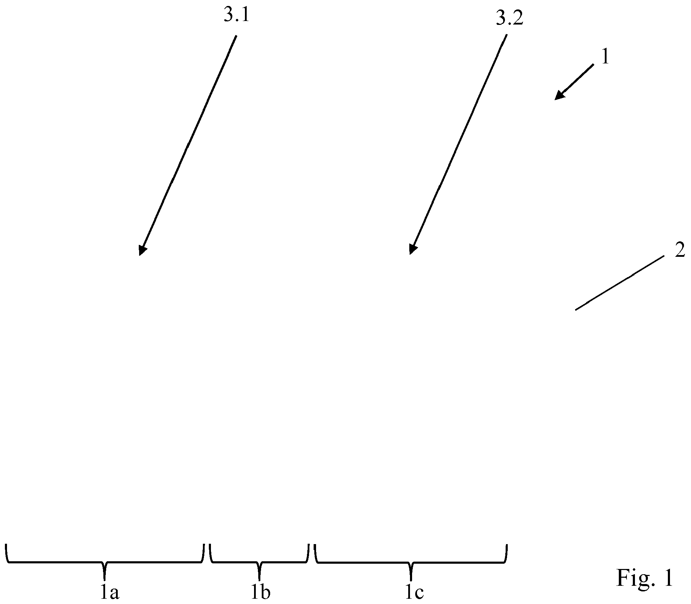

**Figur 1** zeigt eine Strömungsmaschine 1 in einem schematischen Axialschnitt (bezogen auf eine Längsachse 2), konkret ein Mantelstromtriebwerk. Die Strömungsmaschine 1 gliedert sich funktional in Verdichter 1a, Brennkammer 1b und Turbine 1c. Dabei sind sowohl der Verdichter 1a als auch die Turbine 1c jeweils aus mehreren Stufen aufgebaut, jede Stufe setzt sich aus einem Leit- und einem Laufschaufelkranz zusammen. Der Brennkammer 1b vorgelagert wird die angesaugte Luft in einem Verdichtergaskanal 3.1 komprimiert, die Expansion erfolgt in dem nachgelagerten Heißgaskanal 3.2.

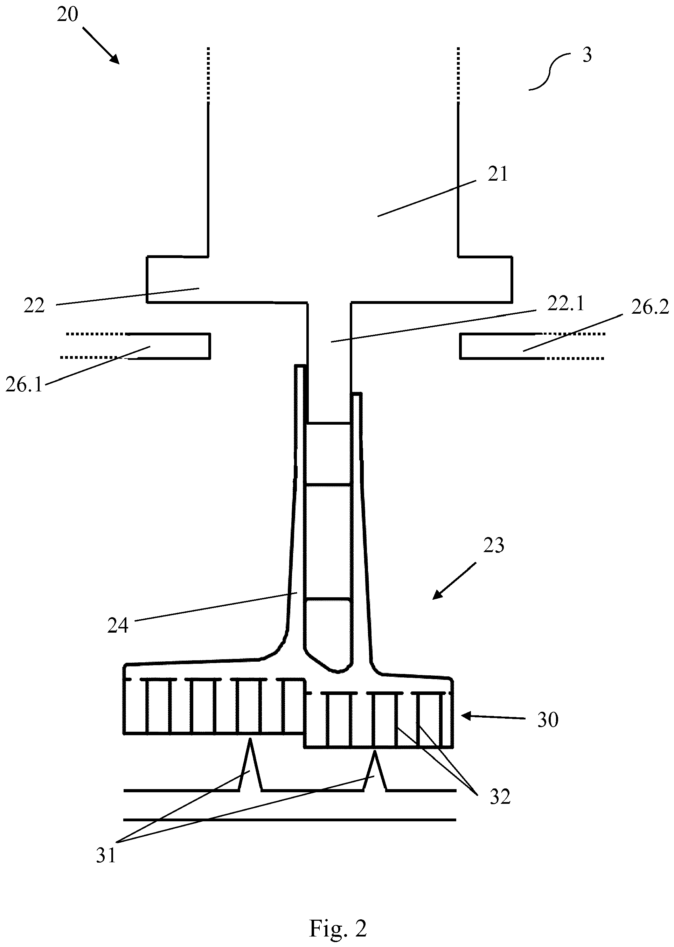

**Figur 2** illustriert einen Ausschnitt eines Moduls 20, das in dieser Form sowohl im Verdichter 1a als auch in der Turbine 1c vorgesehen sein kann. Zu erkennen ist eine in dem Gaskanal 3 angeordnete Leitschaufel 21 mit einer Innenplattform 22. Von der Innenplattform 22 erstreckt sich ein Zapfen 22.1 nach radial innen, mit diesem ist eine Dichtanordnung 23 in Form einer sogenannten Speichenzentrierung zusammengesetzt. Der Zapfen 22.1 und ein Dichtungsträger 24 der Dichtanordnung 23 können bspw. miteinander vernietet sein. Zu erkennen sind ferner die jeweiligen Innenplattformen 26.1,26.2 des vor- bzw. nachgelagerten Laufschaufelkranzes.

Von Interesse ist vorliegend insbesondere der Aufbau einer radial innen am Dichtungsträger 24 angeordneten Dichtstruktur 30, gegen welche im Betrieb rotierende Dichtteile 31, nämlich Dichtspitzen (*Fins*) dichten. Die Dichtstruktur 30 ist aus Vorsprüngen 32 aufgebaut, die gemeinsam mit dem Dichtungsträger 24 generativ aufgebaut sind. Die Herstellung erfolgt vorliegend in einem Pulverbettverfahren, wobei die Aufbaurichtung nach radial innen weist, also in Figur 2 nach unten.

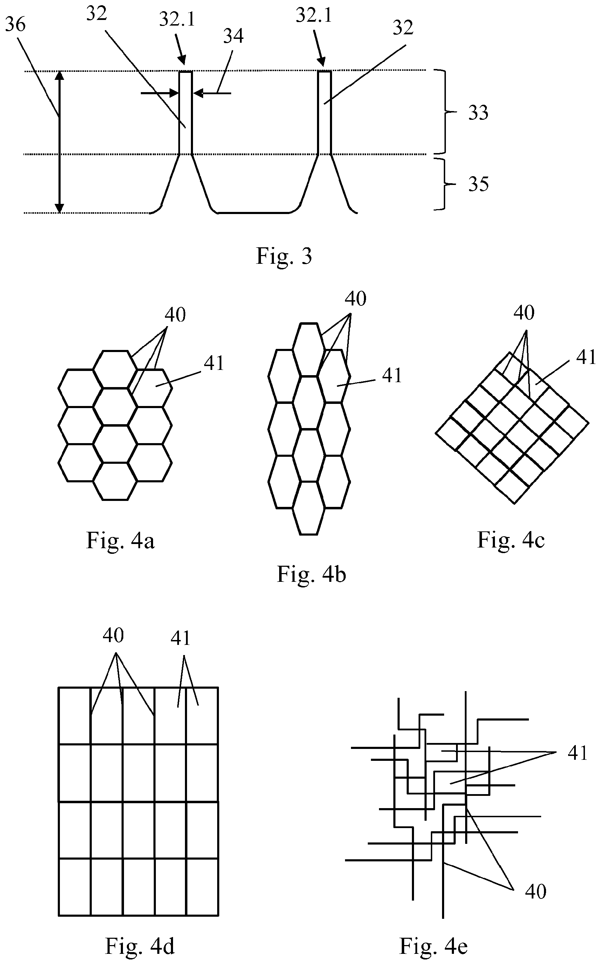

**Figur 3** zeigt zwei Vorsprünge 32 in einem schematischen Schnitt (gegenüber Figur 2 um 180° gedreht). In einem distalen Abschnitt 33 an den freien Enden 32.1 der Vorsprünge 32 liegt ihre jeweilige Dicke 34 bei jeweils rund 150 µm. Der distalen Abschnitt 33 erstreckt sich über 2/3 einer Höhe 36 der Vorsprünge 32. In einen daran, zum Dichtungsträger 24 hin anschließenden proximalen Abschnitt 35 nimmt die Dicke 34 bis auf rund 500 µm zu. Der proximale Abschnitt 35 mit der größeren Dicke schafft eine gute mechanische Anbindung, der distale Abschnitt 33 dient hingegen als Anstreifbereich, in den die Dichtspitzen einlaufen können.

Die Vorsprünge 32 können als Stegwände ausgebildet sein, sich also bezogen auf Figur 3 langestreckt vor und hinter der Schnittebene erstrecken. Die **Figuren 4a****-e** zeigen solche Varianten jeweils in einer Aufsicht, also bezogen auf die Anordnung gemäß Figur 2 von radial innen darauf blickend. Zu erkennen sind einerseits die Stegwände 40 und andererseits die davon begrenzten, nach radial innen offenen Hohlräume 41. Bei der Variante gemäß Figur 4a bilden die Stegwände 40 regelmäßige Sechsecke, also ein konventionelles Honigwabenmuster. Die Figuren 4b-e illustrieren, welche Möglichkeiten die generative Herstellung eröffnet, es ist eine Variation der Honigwabenform möglich (Figur 4b), ebenso sind aber auch andere regelmäßige Geometrien (Figur 4c, d) oder auch gänzlich unregelmäßige Anordnungen möglich (Figur 4e).

**Figur 5** zeigt eine Variante, bei welcher die Vorsprünge 32 zapfenförmige Streben 50 sind. Die Streben 50 halten ein Füllmaterial 51, nämlich Polymermaterial als Einlaufbelag an dem Dichtungsträger 24. Von diesem kann während des Einlaufens ein dem Dichtungsträger 24 entgegengesetzter Bereich abgerieben werden, gemeinsam mit den distalen Abschnitten 33 der Streben 50.

**BEZUGSZEICHENLISTE**

| | |
|---|---|
| Strömungsmaschine | 1 |
| Verdichter | 1a |
| Brennkammer | 1b |
| Turbine | 1c |
| Längsachse | 2 |
| Gaskanal | 3 |
| Verdichtergaskanal | 3.1 |
| Heißgaskanal | 3.2 |
| Modul | 20 |
| Leitschaufel | 21 |
| Innenplattform | 22 |
| Zapfen | 22.1 |
| Dichtanordnung | 23 |
| Dichtungsträger | 24 |
| Innenplattform | 26.1,26.2 |
| Dichtstruktur | 30 |
| Dichtteil (Dichtspitze) | 31 |
| Vorsprünge | 32 |
| Freie Enden | 32.1 |
| Distaler Abschnitt | 33 |
| Dicke | 34 |
| Proximaler Abschnitt | 35 |
| Höhe | 36 |
| Stegwände | 40 |
| Hohlräume | 41 |
| Streben | 50 |
| Füllmaterial | 51 |

## Patentansprüche

1. Dichtanordnung (23) für eine Strömungsmaschine (1), mit
einem Dichtungsträger (24) und
einer an dem Dichtungsträger (24) angeordneten Dichtstruktur (30),
wobei die Dichtstruktur (30) generativ aufgebaute Vorsprünge (32) aufweist, die sich jeweils von dem Dichtungsträger (24) weg zu einem freien Ende (32.1) hin erstrecken,
wobei die Vorsprünge (32) jeweils mit einem variierenden Querschnittsprofil aufgebaut sind, nämlich ein jeweiliger Vorsprung (32)
- in einem dem Dichtungsträger (24) distalen Abschnitt (33), an dem freien Ende (32.1) eine geringere Dicke (34) als
- in einem dem Dichtungsträger (24) proximalen Abschnitt (35) hat.

2. Dichtanordnung (23) nach Anspruch 1, bei welcher die Dicke (34) des jeweiligen Vorsprungs (32) in dem distalen Abschnitt (33) konstant ist.

3. Dichtanordnung (23) nach Anspruch 1 oder 2, bei welcher die Dicke (34) des jeweiligen Vorsprungs (32) in dem distalen Abschnitt (33) mindestens 50 µm und höchstens 250 µm beträgt.

4. Dichtanordnung (23) nach einem der vorstehenden Ansprüche, bei welcher der jeweilige Vorsprung (32) in dem proximalen Abschnitt (35) eine maximale Dicke hat, die mindestens dem 3-fachen einer mittleren Dicke in dem distalen Abschnitt (33) entspricht.

5. Dichtanordnung (23) nach einem der vorstehenden Ansprüche, bei welcher sich der proximale Abschnitt (35) über mindestens 1/6 und höchstens 1/2 einer zu dem freien Ende (32.1) des jeweiligen Vorsprungs (32) hin genommenen Höhe (36) erstreckt.

6. Dichtanordnung (23) nach einem der vorstehenden Ansprüche, bei welcher der jeweilige Vorsprung (32) eine zu seinem freien Ende (32.1) hin genommene Höhe (36) von mindestens 2 mm und höchstens 6 mm hat.

7. Dichtanordnung (23) nach einem der vorstehenden Ansprüche, bei welcher der jeweilige Vorsprung (32) mit einer Verrundung in den Dichtungsträger (24) läuft, die sich aus einer Mehrzahl Radien zusammensetzt.

8. Dichtanordnung (23) nach einem der vorstehenden Ansprüche, bei welcher die Vorsprünge (32) Streben (50) sind und die Dichtstruktur (30) zusätzlich ein Füllmaterial (51) aufweist, wobei die Streben (50) in das Füllmaterial (51) eingebettet sind und dieses an dem Dichtungsträger (24) halten.

9. Dichtanordnung (23) nach einem der Ansprüche 1 bis 7, bei welcher die Vorsprünge (32) Stegwände (40) sind, die miteinander Hohlräume (41) begrenzen, die jeweils zu einer dem Dichtungsträger (24) entgegengesetzten Seite hin offen sind.

10. Dichtanordnung (23) nach Anspruch 9, bei welcher die Stegwände (40) jeweils Vollkörper sind, sich also jeweils zwischen ihren einander entgegengesetzten Außenwandflächen unterbrechungsfrei durchgehend erstrecken.

11. Modul (20) für eine Strömungsmaschine (1), mit einer Dichtanordnung (23) nach einem der vorstehenden Ansprüche und einem im Betrieb relativ dazu bewegten Dichtteil (31).

12. Modul (20) nach Anspruch 11, welches einen Gaskanal (3) der Strömungsmaschine (1) radial begrenzt, wobei die Dichtanordnung (23) radial innerhalb des Gaskanals (3) angeordnet ist.

13. Modul (20) nach Anspruch 12, bei welchem die Dichtanordnung (23) radial innerhalb einer Innenplattform (22) eines Leitschaufelkranzes des Moduls (20) aufgehängt und relativ zu dem Leitschaufelkranz lagefixiert vorgesehen ist, wobei das Dichtteil (31) relativ zu einem Laufschaufelkranz des Moduls (20) lagefixiert vorgesehen ist.

14. Strömungsmaschine (1), insbesondere Strahltriebwerk, mit einer Dichtanordnung (23) nach einem der Ansprüche 1 bis 10 oder einem Modul (20) nach einem der Ansprüche 11 bis 13.

15. Verfahren zum Herstellen einer Dichtanordnung (23) nach einem der Ansprüche 1 bis 10 oder eines Moduls (20) nach einem der Ansprüche 11 bis 13 oder einer Strömungsmaschine (1) nach Anspruch 14, bei welchem die Vorsprünge (32) der Dichtstruktur (30) generativ aufgebaut werden.
